# EUROPEAN PATENT APPLICATION

(11) **EP 3 757 920 A1**
(43) Date of publication of application: **30.12.2020**
(21) Application number: 19182083.6
(22) Date of filing: 24.06.2019
(51) Int. Cl.: G06Q 20/38

(54) **CRYPTOCURRENCY KEY MANAGEMENT**

(71) Applicant: Blockstar Developments Limited, Edinburgh, Lothian EH2 4AD (GB)
(72) Inventor: Roach, Paul, Edinburgh, EH1 3RJ (GB); Sabanov, Tim, Edinburgh, EH6 4BH (GB)
(74) Representative: Definition IP Limited

(57) **Abstract**

A method of managing cryptocurrency keys. The method comprises: generating one or more cryptocurrency keys; encrypting the cryptocurrency keys with a password and communicating the encrypted cryptocurrency keys to remote storage. The method further comprises, subsequently, retrieving the encrypted cryptocurrency keys from the remote storage; decrypting the encrypted cryptocurrency keys with the password, and storing temporarily the decrypted cryptocurrency keys for use in one or more cryptocurrency transactions.

## Description

### Technical Field

The present invention relates to techniques for managing cryptocurrency keys.

### Background

"Digital wallets" are well known for enabling users to make digital payments. A digital wallet is typically implemented as an application which can be run on a user device and which can store a user's payment credentials. A digital wallet application typically further includes functionality enabling the digital wallet to interact with other processes and services to enable transactions to be made.

In the context of cryptocurrencies, a digital wallet would typically provide functionality for generating and storing a user's public key (public address) and securely storing a user's private cryptocurrency keys.

It is clearly extremely important that a digital wallet is as secure as possible. Strong password-based encryption techniques are typically used to secure the secret information stored in the digital wallet. In this way, the digital wallet can only be accessed by someone who knows a secret password.

Typically, digital wallet systems are implemented, at least in part, on a user's device, for example a smartphone. For example, a user's private cryptocurrency keys might typically be generated and stored on the user's device. Even if the user's private cryptocurrency keys are generated and stored securely on the user device, such a system is still vulnerable to being "hacked", e.g. the user's device being compromised by a malicious third party and the user's private cryptocurrency keys, even if encrypted, being retrieved. Such a malicious third party could then attempt to decrypt the user's keys. If such an attempt to decrypt the user's private cryptocurrency keys is successful, the unauthorised party could then potentially make cryptocurrency transactions without the user's permission, possibly stealing the user's cryptocurrency.

It is aim of the invention to provide techniques which improve conventional digital wallets and in particular the security with which cryptocurrency keys for cryptocurrency transactions are secured.

### Summary of the Invention

In accordance with a first aspect of the invention, there is provided a method of managing cryptocurrency keys. The method comprises: generating one or more cryptocurrency keys; encrypting the cryptocurrency keys with a password and communicating the encrypted cryptocurrency keys to remote storage, and, subsequently retrieving the encrypted cryptocurrency keys from the remote storage; decrypting the encrypted cryptocurrency keys with the password, and storing temporarily the decrypted cryptocurrency keys for use in one or more cryptocurrency transactions.

Optionally, the cryptocurrency keys are associated with a digital wallet.

Optionally, the cryptocurrency keys are generated in accordance with a Hierarchical Deterministic (HD) wallet.

Optionally, the steps of: generating the one or more cryptocurrency keys; encrypting the cryptocurrency keys; communicating the encrypted cryptocurrency keys to remote storage; retrieving the encrypted cryptocurrency keys from the remote storage; decrypting the encrypted cryptocurrency keys with the password, and storing temporarily the decrypted cryptocurrency keys for use in one or more cryptocurrency transactions, are undertaken by an application running on a first device.

Optionally, the method further comprises at the first device, deleting the decrypted cryptocurrency keys after the occurrence of a predetermined event.

Optionally, the predetermined event includes at least one or more of the application being closed on the first device, an expiry of an authorised transaction session associated with the one or more cryptocurrency transaction sessions or a predetermined timeout period elapsing.

Optionally, the method further comprises performing an authentication process to authenticate the identity of the first device before the encrypted keys are retrieved from the remote storage.

Optionally, the authentication process comprises: communicating, by the first device, a log in request, to a first application server running a server-side application, said log in request comprising first user credentials; communicating by the first device, a pre-authentication request by the first device to the first application server running the server-side application said pre-authentication request comprising second user credentials; communicating, by the first application server, the first user credentials from the log in request to a second application server running a management application, and communicating, by the first application server, the pre-authentication request to the second application server running the management application, and matching, by the management application, the first user credentials from the log in request and the second user credentials from the pre-authentication request, and authenticating, by the management application, the first device if the first user credentials and second user credentials correspond.

Optionally, upon authentication of the first device, the management application issues an authentication token to the first device granting access to the encrypted cryptocurrency keys stored in the remote storage.

Optionally, before encrypting the cryptocurrency keys with the password, the application controls the first device to receive user inputted password data corresponding to the password, and before decrypting the encrypted cryptocurrency keys, the client application controls the first device to receive user inputted password data corresponding to the password, wherein the password data is not permanently stored on the first device.

Optionally, the first device is a personal computing device.

Optionally, the personal computing device is one of a smartphone, tablet or personal computer.

Optionally, the remote storage comprises a further application server on which is running a secure data vault application.

In accordance with a second aspect of the invention, there is provided a system for managing cryptocurrency keys. The system comprises at least one user device and at least one server providing secure remote storage, wherein the user device has running thereon software operable to control the user device to: generate one or more cryptocurrency keys; encrypt the cryptocurrency keys with a password, and communicate the encrypted cryptocurrency keys to the remote server, said remote server arranged to securely store the encrypted cryptocurrency keys in secure storage, and the software running on the user device is operable, subsequently, to control the first device to request the encrypted cryptocurrency keys from the server; receive the encrypted cryptocurrency keys from the server; decrypt the encrypted cryptocurrency keys with the password, and temporarily store the decrypted cryptocurrency keys for use in one or more cryptocurrency transactions.

In accordance with a third aspect of the invention, there is provided a user device for conducting cryptocurrency transactions. The user device comprises software operable to control the user device to: generate one or more cryptocurrency keys; encrypt the cryptocurrency keys with a password; communicate the encrypted cryptocurrency keys to remote storage, and, subsequently retrieve the encrypted cryptocurrency keys from the remote storage; decrypt the encrypted cryptocurrency keys with the password, and store temporarily the decrypted cryptocurrency keys for use in one or more cryptocurrency transactions.

In accordance with certain aspects of the invention, a technique is provided for managing cryptocurrency keys, in particular, for example cryptocurrency keys generated in accordance with a digital wallet such as a hierarchical deterministic (HD) wallet.

In accordance with examples of the technique, typically at a user device such as a smartphone, a set of cryptocurrency keys are initially generated and then encrypted with a user-provided secret password. Typically, the secret password is not permanently stored at the user device and is deleted from the user device once it has been used to encrypt the cryptocurrency keys. The encrypted cryptocurrency keys are then communicated from the user device to a remote and secure storage location such as a data vault. The encrypted cryptocurrency keys are typically only stored in the remote storage location and are not permanently stored on the user device where they were initially generated.

Subsequently, when, for example, a user wishes to undertake one or more cryptocurrency transactions, a copy of the encrypted cryptocurrency keys are retrieved from the remote storage by the user device which also receives from the user the secret password. The encrypted cryptocurrency keys are then decrypted. The decrypted keys are then temporarily stored to facilitate any desired cryptocurrency transactions. After a predetermined event (e.g. the termination of a cryptocurrency transaction session), the decrypted encryption keys are deleted from the user device.

In accordance with this technique, the user password need never be permanently stored anywhere, and the cryptocurrency keys are only permanently stored on a remote device and in an encrypted form. The chances of the private cryptocurrency keys being compromised is therefore substantially reduced. Further, even if the remote storage is compromised and the encrypted key store discovered, the fact that the user password is known only to the user and never permanently stored means the likelihood of the private cryptocurrency password being discovered is low.

Various further features and aspects of the invention are defined in the claims.

### Brief Description of the Drawings

Embodiments of the present invention will now be described by way of example only with reference to the accompanying drawings where like parts are provided with corresponding reference numerals and in which:
Figure 1 provides a simplified schematic diagram of a system arranged in accordance with certain embodiments of the invention;
Figure 2 provides a diagram depicting a digital wallet generation process in accordance with certain embodiments of the invention;
Figure 3 provides a diagram depicting a digital wallet authentication process in accordance with certain embodiments of the invention;
Figure 4 provides a diagram depicting a digital wallet unlocking process in accordance with certain embodiments of the invention, and
Figure 5 depicts a process for facilitating a cryptocurrency transaction in accordance with certain embodiments of the invention.

### Detailed Description

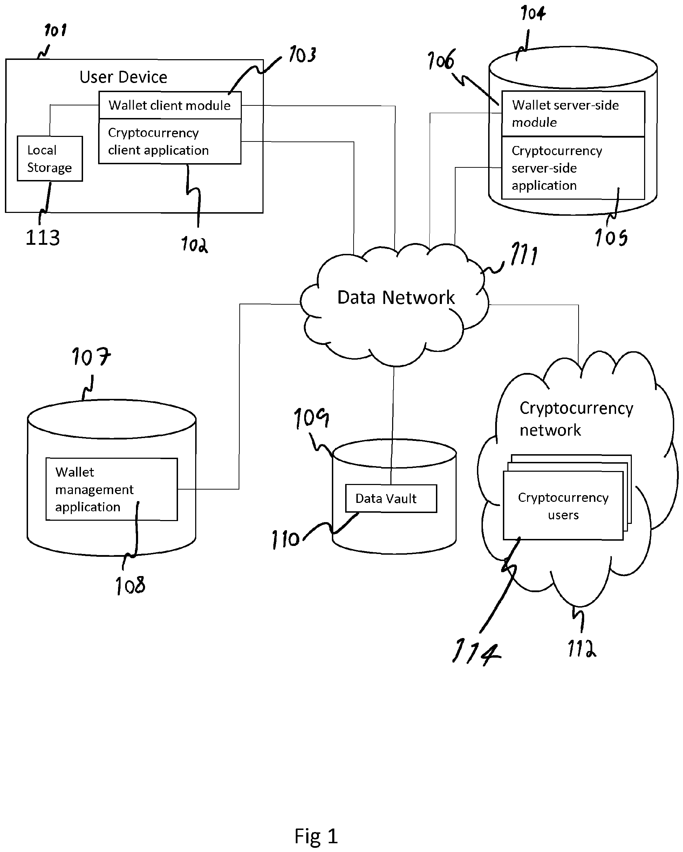

Figure 1 provides a schematic diagram of a system 100 arranged in accordance with certain embodiments of the invention.

The system includes a user device 101, on which is running a first software module providing a cryptocurrency client application 102 and a second software module providing a digital wallet client module 103.

The user device 101 is typically provided by a suitable computing device comprising processing means, memory, a user input interface and data communication means for communicating data to and receiving data from other computing devices. Typically, the user device is provided by a personal computing device such as a smartphone, tablet, personal computer or other suitable personal computing device.

The system further comprises a first application server 104 on which is running a third software module providing a cryptocurrency server-side application 105 and a fourth software module providing a digital wallet server-side module 106.

The system further comprises a second application server 107 on which is running a digital wallet management application 108 and a third application server 109 on which is running software (an application) providing a secure data vault 110.

The application servers are typically provided by suitable computing devices comprising processing means, memory and data connection means.

The components of the system are arranged to communicate data via a data network 111 using data communication techniques well known in the art. The data connections between the components of the system can be provided by any suitable data connections known in the art including wired and/or wireless data connections.

In use, a user of the user device 101 can use the cryptocurrency client application 102 in conjunction with the digital wallet client module 103 to conduct cryptocurrency transactions with a cryptocurrency network 112 formed of other devices 114 associated with other cryptocurrency users.

The system shown in Figure 1 is depicted in a simplified manner, but as will be readily understood by the skilled person, can be implemented in any suitable way. In one example implementation, the user device 101 is a smartphone arranged to communicate data to and from a cellular telecommunication network (not shown) which has an onward connection to the data network 111 which is provided by the internet. The first application server 104, second application server 107 and third application server 109 are hosted on physical servers in the same physical location or different physical locations. Each physical server is connected via suitable network connections to the internet. In this way data (using conventional internet protocol IP communication techniques) can be communicated to and from the user device 101 and the first, second and third application servers. The devices of the other users 114 of the cryptocurrency network 112 are other user devices (e.g. smartphones, personal computers, tablets etc) on which is running cryptocurrency application software enabling users of the other user devices 114 to conduct cryptocurrency transactions. The other user devices 114 are similarly connected to the internet enabling data to be communicated to and from the user device 101.

The cryptocurrency server-side application 105 running on the first application server 104 supports the operation of the cryptocurrency client application 102 providing, for example, security and authentication functions.

The cryptocurrency client application 102 typically provides a user interface providing a means by which a user can arrange cryptocurrency transactions and can be presented with information such as cryptocurrency balances and so on.

In certain examples, the cryptocurrency client application 102 and the cryptocurrency server-side application 105 are developed and maintained by a first party and the digital wallet client module 103, the digital wallet server-side module 106 and the digital wallet management application 108 are developed and maintained by a second party.

For example, the first party may be a party supplying cryptocurrency software directly to consumers and the second party may be a party supplying cryptocurrency software tools to the first party.

In certain examples, the digital wallet client module 103 is provided as code which is integrated by the first party with the cryptocurrency client application 102 and the digital wallet server-side module 106 is provided as code which is integrated by the first party with the cryptocurrency server-side application 105.

Although in some examples the software running on the user device (i.e. the cryptocurrency client application 102 and digital wallet client module 103) are developed separately, together they are deployed as a single client application. Similarly, although in some examples the software running on the first application server (i.e. the cryptocurrency server-side application and the digital wallet server-side module 106) are developed separately, together they are deployed as a single server-side application.

In certain examples, the digital wallet client module and cryptocurrency client application may be provided in a single application, downloaded to the user device as an "app" from remote server (e.g. an "app store").

To use the user device 101 to conduct cryptocurrency transactions, initially a digital wallet creation process is performed. To initiate this process, the cryptocurrency client application 102 determines whether or not a digital wallet has been created. If it is determined that a wallet has not yet been created, a wallet creation process is initiated.

### Wallet creation

Before the wallet creation process is performed, a cryptocurrency account creation process is performed whereby, via the interface provided by the cryptocurrency client application 102, a user establishes a cryptocurrency application account with the cryptocurrency server-side application 105. During this process, cryptocurrency application user credentials (e.g. a cryptocurrency application username and cryptocurrency application password) are established for the user which are used by the cryptocurrency server-side application 105 to authenticate the user.

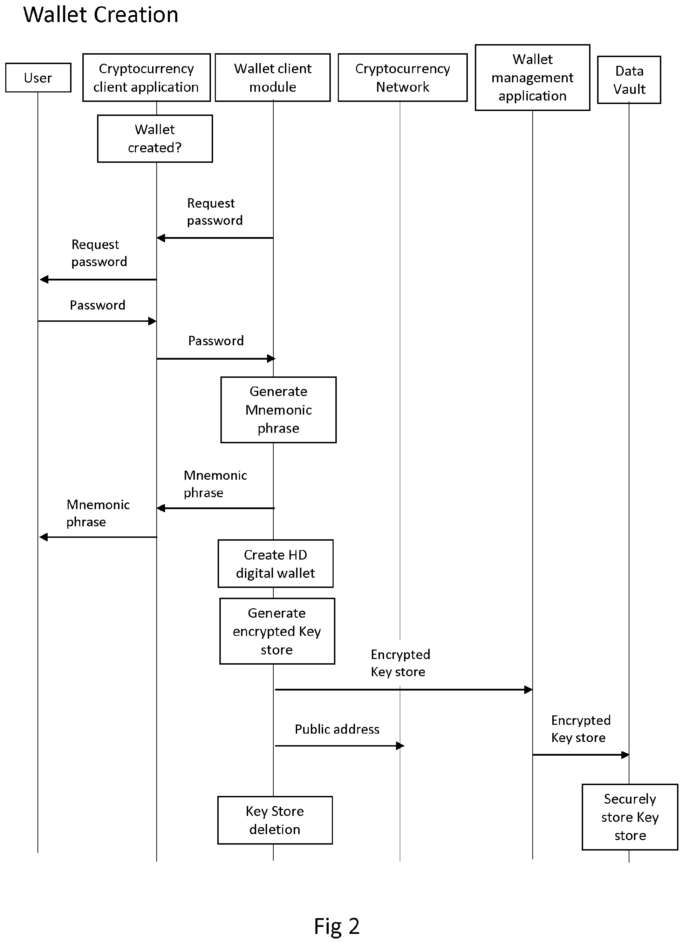

Figure 2 provides a diagram depicting a digital wallet generation process in accordance with certain embodiments of the invention.

Initially, the cryptocurrency client application 102 determines whether a digital wallet has already been created. In certain examples, this can be achieved by the cryptocurrency client application 102 sending, via the digital wallet client module 103, a query to the digital wallet server-side module 106 which is forwarded to the digital wallet management application 108 with a copy of the user credentials. If the digital wallet management application 108 determines that a digital wallet has not been created that is associated with those user credentials, the digital wallet management application 108 communicates a message indicating that no digital wallet has been created to the cryptocurrency client application 102 via the digital wallet server-side module 106 and digital wallet client module 103.

In the event that no wallet has been created initially, the digital wallet client module 103 prompts the cryptocurrency client application 102 to request a secret password from the user. This is typically done via an interface displayed on a display device (e.g. smartphone touchscreen) of the user device 101.

The secret password is typically input in the form of an alphanumeric string (password data is formed from an alphanumeric string) entered by the user by input means of the user device (e.g. a touchscreen keyboard presented on the display of the user device 101).

The wallet cryptocurrency application 102 may be arranged to only accept a password from the user if it meets certain criteria. For example, has a certain length, or contains a predetermined combination of different types of characters. On receipt of an acceptable password, the cryptocurrency application 102 passes the password to the digital wallet application 103.

After (or, alternatively, before) receiving the secret password from the user, the digital wallet client module 103 performs a random mnemonic phrase generation process which generates a random mnemonic phrase.

Once created, the digital wallet client module 103 communicates the mnemonic phrase to the wallet cryptocurrency application 102 which in turn presents it to the user on the display of the user device 101. This enables the user to record the random mnemonic sentence (e.g. by writing it down and storing it secretly). Knowledge of the password and mnemonic phrase enables the digital wallet to be recreated at a later point if needed.

The digital wallet client module 103 then performs a cryptocurrency key generation process in which the random mnemonic sentence and the secret password are used to seed a process which generates digital wallet cryptocurrency keys. This step is typically performed in accordance with known digital wallet creation processes creating, for example, a Hierarchical Deterministic (HD) wallet creation process.

These cryptocurrency keys include a cryptocurrency public address which is communicated to other user devices 114 of the cryptocurrency network 112 via the data network 111, and a set of private cryptocurrency keys used to encrypt transaction information.

The digital wallet client module 103 then performs a key encryption process in which the private cryptocurrency keys are encrypted using the secret password provided by the user to create an encrypted key store. The encrypted key store is typically generated in the form of a JSON file encrypted with the secret password provided by the user.

The digital wallet client module 103 then communicates, via the data network 111, the encrypted key store (e.g. the JSON file containing the private cryptocurrency keys encrypted with the secret password) to the digital wallet management application 108 running on the second server 107. The digital wallet management application 108 then forwards the encrypted key store to the secure data vault 110 running on the third application server 109 where it is securely stored.

Once the digital wallet has been generated in this way, the system can be used so that a user of the user device can conduct cryptocurrency transactions with other users of the cryptocurrency network 112. However, the only place within the system that the encrypted key store is permanently stored is in the secure data vault 110.

### Authentication

Once a digital wallet has been created for a user as described above, and a user wishes to use the system for conducting a cryptocurrency transaction, an authentication process is undertaken to authenticate the user device 101 so that the data vault 110 can be accessed and in particular so that the encrypted key store can be retrieved.

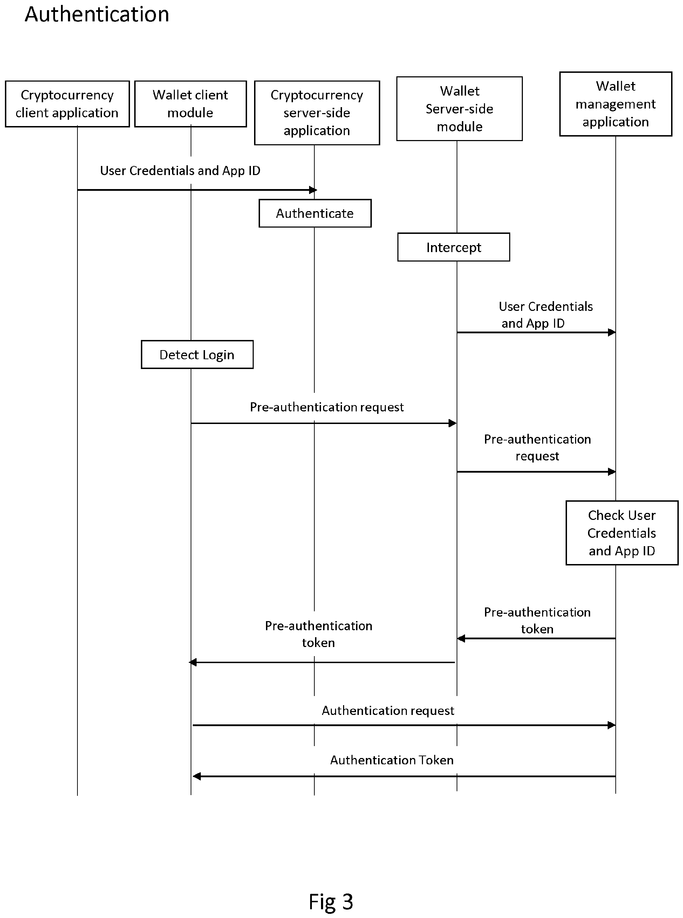

Figure 3 provides a diagram depicting a digital wallet authorisation process in accordance with certain embodiments of the invention.

In an example of authorisation process the user initially initiates a login process at the cryptocurrency client application 102. The login process requires the user to provide their cryptocurrency application user credentials (e.g. their cryptocurrency application username and cryptocurrency application password) to the cryptocurrency client application 102.

The cryptocurrency client application 102 communicates the user credentials and an application identifier which identifies the cryptocurrency client application 102 running on the user device 101, to the cryptocurrency server-side application 105 running on the first server 104 in a user log in request. The cryptocurrency server-side application 105 performs a user log in process which authenticates the cryptocurrency client application 102 with the cryptocurrency server-side application 105.

The digital wallet server-side application 106 intercepts the user log in request at the cryptocurrency server-side application 105. In the event that the log in process performed by the cryptocurrency server-side application 105 is successful (i.e. the cryptocurrency application username and cryptocurrency application password are correct), the digital wallet server-side application 106 communicates the user credentials and the application identifier from the user authentication request to the digital wallet management application 108 running on the second application server 107.

Separately, the digital wallet client module 103 detects the initiation of the login process at the cryptocurrency client application 102 and responsive to this, sends a pre-authentication request to the digital wallet server-side application 106 which also includes the user credentials provided by the user. The digital wallet server-side application 106 forwards this pre-authentication request to the digital wallet management application 108.

The digital wallet management application 108 undertakes a matching process in which the user credentials received from the digital wallet server-side application 106 are matched with the user credentials received in the pre-authentication request from the digital wallet client module 103. In the event that the digital wallet management application 108 determines the user credentials and the application identifier match, the digital wallet management application 108 communicates a pre-authentication token to the digital wallet server-side application 106. In turn, the digital wallet server-side application 106 communicates the pre-authentication token to the digital wallet client module 103.

In response to receipt of the pre-authentication token, the digital wallet client module 103 communicates an authentication request to the digital wallet management application 108 including the pre-authentication token. On receipt of the authentication request and validation of the pre-authentication token, the digital wallet management application 108 generates an authentication token and communicates this to the digital wallet client module 103. The digital wallet client module 103 then stores the authentication token in local storage 113 on the user device 101. This authentication token, whilst it remains valid, enables the digital wallet client module 103 to communicate directly with the digital wallet management application 108 and in particular to retrieve the encrypted key store as is explained in more detail below.

Advantageously, this authentication process ensures that an authentication token is only issued to the user device in the event that the user credentials received from the user device correspond to those intercepted during the authentication process performed by the cryptocurrency server-side application 105.

### Wallet Unlocking

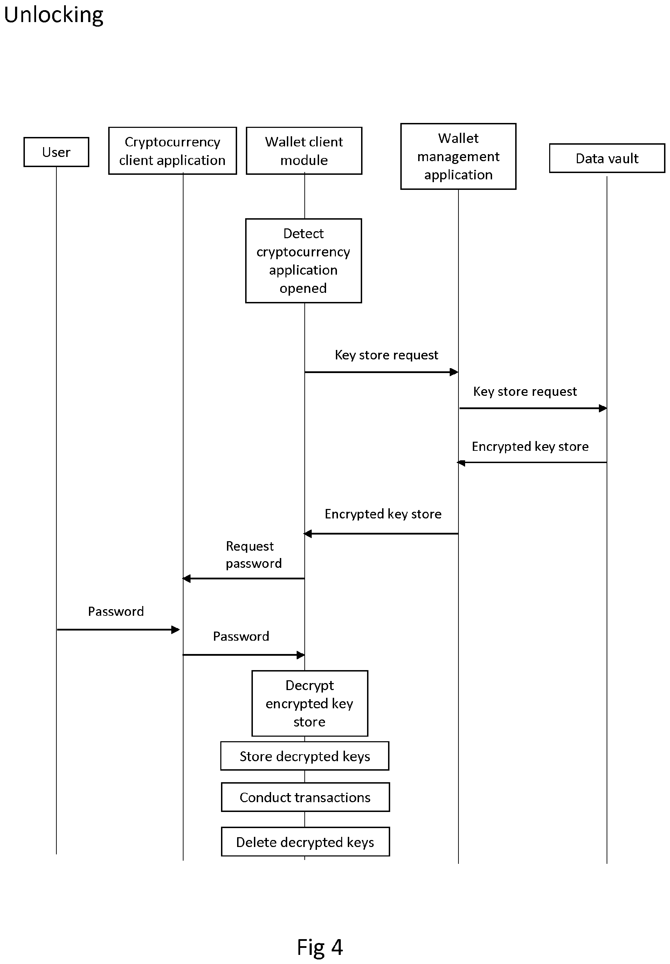

Once the user device 101 is authenticated (e.g. the authentication process described above has been successfully performed) and assuming a wallet has been created (e.g. by virtue of the wallet creation process described above) to use the system to engage in cryptocurrency transactions, the private cryptocurrency keys stored remotely in the data vault application 110 must be retrieved from the data vault application 110 and sent to the user device 101. Figure 4 provides a diagram depicting a digital wallet unlocking process in accordance with certain embodiments of the invention.

The digital wallet client module 103 detects that a user wishes to use the system (for example, by virtue of the user commencing a transaction process on the cryptocurrency client application 102).

The digital wallet client module 103 communicates a key store request to the digital wallet management application 108 and, assuming the authentication process as detailed above has been successful, the digital wallet management application 108 communicates a key store request to the data vault 110. The data vault 110 retrieves the encrypted key store and communicates this to the digital wallet management application 108, which in turn communicates it to the digital wallet client module 103 running on the user device 101.

Responsive to this, the cryptocurrency client application 102 prompts the user to enter the secret password for decrypting the encrypted key store. On entry of the password, the digital wallet client module 103 is arranged to perform a decryption process in which the password is used to decrypt the encrypted key store thereby generating the private cryptocurrency keys. The digital wallet client module 103 is then operable to control the user device to temporarily store the private cryptocurrency keys in the local storage 113 of the user device 101. The private cryptocurrency keys associated with the digital wallet are then available for undertaking cryptocurrency transactions.

### Wallet Transactions

The cryptocurrency client application 102 conducts cryptocurrency transactions using the private cryptocurrency keys in a conventional fashion.

To conduct cryptocurrency transaction with other users 114 of the cryptocurrency network 112, the cryptocurrency client application 102 communicates the cryptocurrency public address of the user is to the cryptocurrency network 112. The user's cryptocurrency private cryptocurrency keys are used to encrypt transaction information (for example a transaction amount and recipient) which is then validated and recorded on the de-centralised cryptocurrency currency ledger as is known in the art.

The encrypted key store and the decrypted private cryptocurrency keys are not stored permanently on the user device 101. Typically, the encrypted key store is deleted as soon as it has been decrypted to generate the private cryptocurrency keys. The decrypted private cryptocurrency keys are deleted when a transaction session is finished. For example, if the cryptocurrency client application 102 is closed down by the user or times out (e.g. is not interacted with by the user for longer than a predetermined period of time).

In certain embodiments, the digital wallet management application 108 is arranged to undertake further security functions to identify suspicious behaviour indicative of an unauthorised party attempting to gain access to a user's encrypted key store. Such security functions can include logging requests to access the encrypted key store to monitor the frequency with which a particular user is attempting to access the encrypted key store. Such logging can be used to identify unusually high frequencies of access attempts which may be indicative of suspicious activity. Further security functions can includes monitoring the IP address from which requests for the encrypted key store is originating to identify unusual patterns of behaviour, for example, several requests in quick succession from IP addresses from which requests have not previously originated. In the event that such security functions identify potentially suspicious behaviour, the digital wallet management application 108 may be arranged to communicate a security alert to the cryptocurrency server-side application 105 responsive to which, the cryptocurrency server-side application 105 may be adapted to take appropriate action, for example suspending a user account.

In the example of the technique described above, for simplicity, the system has been described with reference to a single user device. However, in typical implementations, it will be understood that the system comprises many user devices operated by different users communicating with the cryptocurrency server-side application, digital wallet server-side module, digital wallet server-side management application and data vault.

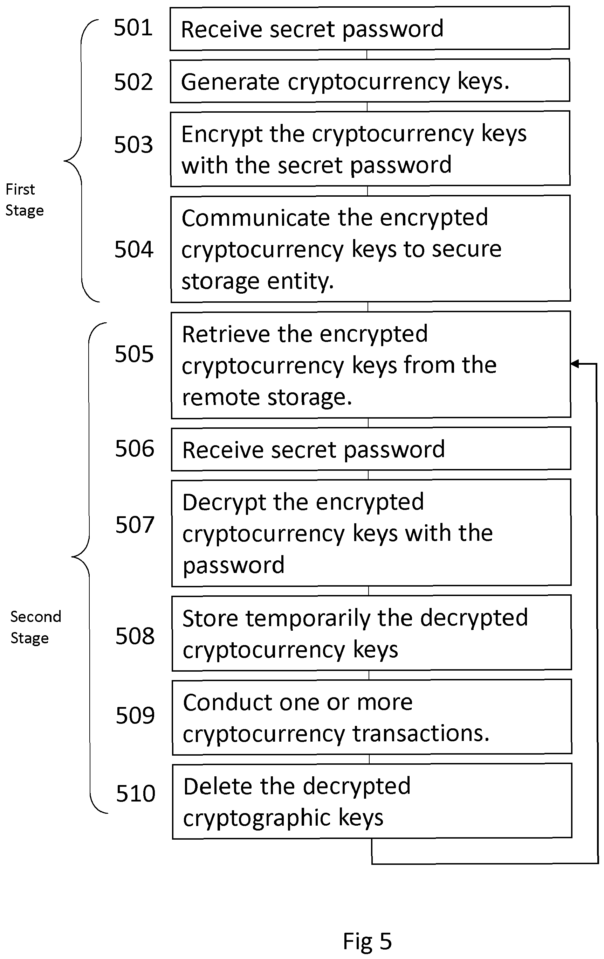

Figure 5 depicts a process for managing cryptocurrency keys and facilitating a cryptocurrency transaction in accordance with certain embodiments of the invention.

The process comprises two stages. During the first stage cryptocurrency keys are generated, encrypted and then stored at a secure remote storage entity. During the second stage the encrypted keys are retrieved, decrypted, used to conduct cryptocurrency transactions and then deleted. The first stage need only be performed once, whereas the second stage can be repeated as many times as needed.

At a first step 501 a secret password is received. Typically, the secret password is provided by a user who retains knowledge of the secret password. Typically, the secret password is not permanently stored in any element of the system performing the process.

At a second step 502 one or more cryptocurrency keys are generated for performing cryptocurrency transactions. Typically, the cryptocurrency keys are generated as part of a digital wallet generation process for example, a hierarchical deterministic (HD) digital wallet generation process seeded by a mnemonic phrase and the secret password. Typically, the cryptocurrency keys are generated on a user device.

At the third step 503 the one or more cryptocurrency keys undergo an encryption process such that only data corresponding to the secret password can decrypt the cryptocurrency keys once encrypted.

At a fourth step 504 the encrypted cryptocurrency keys are communicated to a remote storage entity.

As described above, these steps need only be performed once for any particular user.

Subsequently, at a fifth step 505, the encrypted cryptocurrency keys are retrieved from the remote storage and at a fifth step 506 the secret password is again received.

At a seventh step 507 the encrypted cryptocurrency keys are decrypted using the secret password and at and an eighth step 508 the decrypted cryptocurrency keys are temporarily stored.

At a ninth step 509 one or more cryptocurrency transactions are performed using the decrypted cryptocurrency keys. At the tenth step 510, the decrypted cryptocurrency keys are deleted.

As described above, these steps (i.e. steps 505, 506, 507, 508, 509, 510) can be performed multiple times, for example every time a user engages in a cryptocurrency transactions session, comprising, for example, one or more cryptocurrency transactions.

In certain embodiments described above, a system for facilitating a cryptocurrency transaction is provided by components including a user device running a cryptocurrency client application and digital wallet client module, a first server running a cryptocurrency server-side application and digital wallet server-side module, a second application server running a digital wallet management application and a third server providing a secure data vault. However, it will be understood that this is one example system architecture and the skilled person will understand that alternative system architectures can be used to implement processes of the type described with reference to Figure 5. For example, in a simpler implementation, a user device on which the cryptocurrency keys are generated may communicate directly with a single application server which performs the processes described above (e.g. the wallet creation process, the authentication process and the wallet unlocking process) and which also stores the encrypted cryptocurrency keys.

It will be understood that the system components described with reference to Figure 1, in particular, the first, second and third application servers are depicted as physically separate computing entities. However, in certain embodiments, it will be understood that these are logical designations and that the software components running on these applications servers (e.g. the cryptocurrency server-side application, digital wallet server-side module, digital wallet management application and secure data vault) can be distributed across one or more computing devices, for example in accordance with known distributed computing techniques (e.g. cloud computing techniques).

Techniques in accordance with embodiments of the invention can be used with any suitable blockchain based cryptocurrencies in which a user's public address is communicated to the network and their private keys are used to encrypt transaction information which is then stored on a verified public ledger. Examples include Bitcoin, Ethereum, Ripple, Eos, Neo, Cardano, Cosmos and Stellar.

For simplicity, examples of the invention have been described above in terms of facilitating cryptocurrency transactions with a single cryptocurrency network. However, in certain implementations of the technique, the private cryptocurrency keys generated at, for example, a user device may, comprise private cryptocurrency keys for use with multiple cryptocurrencies and the technique enables a user to conduct cryptocurrency transactions with multiple different cryptocurrency networks. Similarly, it will be understood that in typical implementations of the invention, multiple user devices will be supported by the cryptocurrency server-side application 105, digital wallet server-side application 106, digital wallet management application 108 and data vault 110 enabling multiple users to undertake the wallet creation and cryptocurrency transaction process facilitated by examples of the invention.

All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.
It will be understood by those within the art that, in general, terms used herein, and especially in the appended claims are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

It will be appreciated that various embodiments of the present disclosure have been described herein for purposes of illustration, and that various modifications may be made without departing from the scope of the present disclosure. Accordingly, the various embodiments disclosed herein are not intended to be limiting, with the true scope being indicated by the following claims.

## Claims

1. A method of managing cryptocurrency keys, said method comprising:
generating one or more cryptocurrency keys;
encrypting the cryptocurrency keys with a password and communicating the encrypted cryptocurrency keys to remote storage, and, subsequently
retrieving the encrypted cryptocurrency keys from the remote storage;
decrypting the encrypted cryptocurrency keys with the password, and
storing temporarily the decrypted cryptocurrency keys for use in one or more cryptocurrency transactions.

2. A method according to claim 1, wherein the cryptocurrency keys are associated with a digital wallet.

3. A method according to claim 2, wherein the cryptocurrency keys are generated in accordance with a Hierarchical Deterministic (HD) wallet.

4. A method according to any previous claim, wherein the steps of generating the one or more cryptocurrency keys; encrypting the cryptocurrency keys; communicating the encrypted cryptocurrency keys to remote storage; retrieving the encrypted cryptocurrency keys from the remote storage; decrypting the encrypted cryptocurrency keys with the password, and storing temporarily the decrypted cryptocurrency keys for use in one or more cryptocurrency transactions are undertaken by an application running on a first device.

5. A method according to claim 4, further comprising, at the first device, deleting the decrypted cryptocurrency keys after the occurrence of a predetermined event.

6. A method according to claim 5, wherein the predetermined event includes at least one or more of the application being closed on the first device, an expiry of an authorised transaction session associated with the one or more cryptocurrency transaction sessions or a predetermined timeout period elapsing.

7. A method according to any of claims 4 to 6, further comprising performing an authentication process to authenticate the identity of the first device before the encrypted keys are retrieved from the remote storage.

8. A method according to claim 7, wherein the authentication process comprises:
communicating, by the first device, a log in request, to a first application server running a server-side application, said log in request comprising first user credentials;
communicating by the first device, a pre-authentication request by the first device to the first application server running the server-side application said pre-authentication request comprising second user credentials;
communicating, by the first application server, the first user credentials from the log in request to a second application server running a management application, and
communicating, by the first application server, the pre-authentication request to the second application server running the management application, and
matching, by the management application, the first user credentials from the log in request and the second user credentials from the pre-authentication request, and
authenticating, by the management application, the first device if the first user credentials and second user credentials correspond.

9. A method according to claim 8, wherein upon authentication of the first device, the management application issues an authentication token to the first device granting access to the encrypted cryptocurrency keys stored in the remote storage.

10. A method according to any of claims 4 to 9, wherein before encrypting the cryptocurrency keys with the password, the application controls the first device to receive user inputted password data corresponding to the password, and before decrypting the encrypted cryptocurrency keys, the client application controls the first device to receive user inputted password data corresponding to the password, wherein the password data is not permanently stored on the first device.

11. A method according to any of claims 4 to 10, wherein the first device is a personal computing device.

12. A method according to claim 10, wherein the personal computing device is one of a smartphone, tablet or personal computer.

13. A method according to any previous claim, wherein the remote storage comprises a further application server on which is running a secure data vault application.

14. A system for managing cryptocurrency keys, the system comprising at least one user device and at least one server providing secure remote storage, wherein
the user device has running thereon software operable to control the user device to:
generate one or more cryptocurrency keys;
encrypt the cryptocurrency keys with a password, and
communicate the encrypted cryptocurrency keys to the remote server, said remote server arranged to securely store the encrypted cryptocurrency keys in secure storage, and
the software running on the user device is operable, subsequently, to control the first device to
request the encrypted cryptocurrency keys from the server;
receive the encrypted cryptocurrency keys from the server;
decrypt the encrypted cryptocurrency keys with the password, and
temporarily store the decrypted cryptocurrency keys for use in one or more cryptocurrency transactions.

15. A user device for conducting cryptocurrency transactions, wherein said user device comprises software operable to control the user device to:
generate one or more cryptocurrency keys;
encrypt the cryptocurrency keys with a password;
communicate the encrypted cryptocurrency keys to remote storage, and, subsequently
retrieve the encrypted cryptocurrency keys from the remote storage;
decrypt the encrypted cryptocurrency keys with the password, and
store temporarily the decrypted cryptocurrency keys for use in one or more cryptocurrency transactions.
